# EUROPEAN PATENT SPECIFICATION

(11) **EP 4 521 338 B1**
(45) Date of publication and mention of the grant of the patent: **08.07.2026**
(21) Application number: 24165435.9
(22) Date of filing: 22.03.2024
(51) Int. Cl.: G06T 7/00

(54) **METHOD AND APPARATUS FOR PROCESSING SAMPLE DATA, ELECTRONIC DEVICE AND STORAGE MEDIUM**
VERFAHREN UND VORRICHTUNG ZUR VERARBEITUNG VON PROBENDATEN, ELEKTRONISCHE VORRICHTUNG UND SPEICHERMEDIUM
PROCÉDÉ ET APPAREIL DE TRAITEMENT DE DONNÉES D'ÉCHANTILLON, DISPOSITIF ÉLECTRONIQUE ET SUPPORT D'INFORMATIONS

(30) Priority: 11.09.2023 CN 202311166776
(43) Date of publication of application: 12.03.2025
(73) Proprietor: Zhejiang Hengyi Petrochemical Co., Ltd., Zhejiang 311200 (CN); Zhejiang Hengyi High-Tech Materials Co., Ltd., Hangzhou, Zhejiang 311223 (CN)
(72) Inventor: PENG, Xiantao, Hangzhou, 311200 (CN); WANG, Peng, Hangzhou, 311200 (CN); LI, Dake, Hangzhou, 311200 (CN); ZHANG, Yaobin, Hangzhou, 311200 (CN); FAN, Huitao, Hangzhou, 311200 (CN); XU, Feng, Hangzhou, 311200 (CN)
(74) Representative: Hannke Bittner & Partner mbB Regensburg

(56) References cited:
- CN-A- 116 188 399
- CN-B- 114 757 900

## Description

### TECHNICAL FIELD

The present disclosure relates to the field of artificial intelligence technology, and especially to the fields of image processing and computer vision.

### BACKGROUND

In the chemical fiber industry, when the spinning box produces chemical fiber yarns, the raw materials for spinning are presented in the form of non-Newtonian fluid with a certain viscosity, and the long-term operation of the spinning box will cause too high machine temperature, so the anomalies such as end breakage of yarn wire, floating yarn, hooking yarn, tilt of oil nozzle, tilt of yarn guide hook, yarn wire being not in yarn guide hook, etc. may occur in the spinning box, and the spinning box needs to be inspected. The traditional inspection method is carried out manually, and has the disadvantages of low efficiency and high cost. In related technologies, a method of using the AI model for image detection is proposed to automatically identify the anomalies in the spinning box. However, the training of the model requires a large number of samples, and also requires manual collection of sample images. The frequency of occurrence of the anomalies in the spinning box is relatively low, and the abnormal areas such as floating yarn and hooking yarn are also more subtle and difficult to identify, due to the filamentous characteristic of the yarn itself. Therefore, the manual collection of sample images is very inefficient and error-prone.

A CN patent application, whose publication number is CN114757900B, discloses a textile defect type identification method based on artificial intelligence, and the method comprises the steps: obtaining a textile surface gray-scale map; clustering the grey-scale map to obtain a first cluster; gaussian fitting is carried out according to the gray values of the pixel points in the first clustering clusters, KL divergence between every two Gaussian models is calculated, and similarity between every two first clustering clusters is obtained; combining the first clusters according to the similarity to obtain second clusters; obtaining a suspected defect area according to the difference value between each second cluster and the gray average value of the normal textile; obtaining the defect area according to the area of each suspected defect area and the aspect ratio of the minimum enclosing rectangle; cutting the RGB image containing the defect areas to obtain the RGB image of each defect area; and identifying defect types in the textile by utilizing the RGB images of the defect areas.

### SUMMARY

The invention is set out in the appended set of claims.

### BRIEF DESCRIPTION OF THE DRAWINGS

In the accompanying drawings, the same reference numbers represent the same or similar parts or elements throughout the accompanying drawings, unless otherwise specified. These accompanying drawings are not necessarily drawn to scale. It should be understood that these accompanying drawings only depict some embodiments provided according to the present disclosure, and should not be considered as limiting the scope of the present disclosure.
FIG. 1 is a schematic diagram of an application scenario of a method for processing sample data according to an embodiment of the present disclosure;
FIG. 2 is a schematic flowchart of a method for processing sample data according to an embodiment of the present disclosure;
FIG. 3 is a schematic block diagram of an apparatus for processing sample data according to an embodiment of the present disclosure;
FIG. 4 is a schematic block diagram of an apparatus for processing sample data according to another embodiment of the present disclosure;
FIG. 5 is a schematic block diagram of an apparatus for processing sample data according to another embodiment of the present disclosure; and
FIG. 6 is a block diagram of an electronic device used to implement a method for processing sample data according to an embodiment of the present disclosure.

### DETAILED DESCRIPTION

The present disclosure will be described below in detail with reference to the accompanying drawings. The same reference numbers in the accompanying drawings represent elements with identical or similar functions. Although various aspects of the embodiments are shown in the accompanying drawings, the accompanying drawings are not necessarily drawn to scale unless specifically indicated.

In addition, in order to better illustrate the present disclosure, numerous specific details are given in the following specific implementations. Those having ordinary skill in the art should understand that the present disclosure may be performed without certain specific details. In some examples, methods, means, elements and circuits well known to those having ordinary skill in the art are not described in detail, in order to highlight the subject matter of the present disclosure.

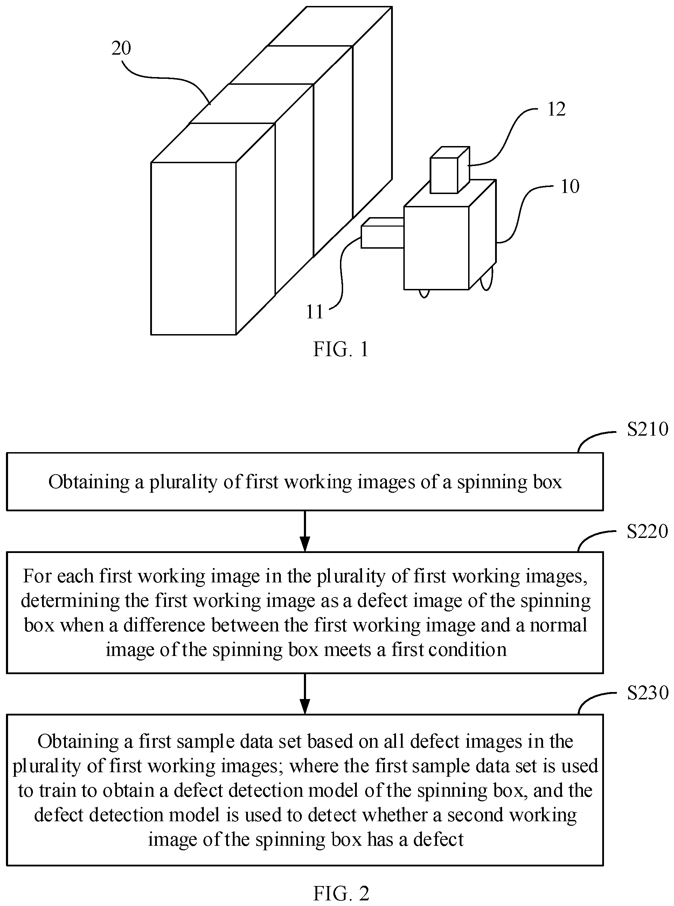

In order to facilitate understanding of the method for processing sample data in the embodiment of the present disclosure, the application scenario of this method are firstly described below as an example. FIG. 1 shows a schematic diagram of an exemplary application scenario of the method for processing sample data according to an embodiment of the present disclosure. This application scenario includes an inspection robot 10 deployed in the workshop, the inspection robot 10 may include an image acquisition device 11, and the image acquisition device 11 (such as webcam, camera, etc.) of the inspection robot 10 is used to collect working images of a spinning box 20.

The image acquisition device 11 can be connected to the processing device 12 and send a first working image of the spinning box 20 to the processing device 12. The processing device 12 is used to process the first working image of the spinning box 20 to obtain a first sample data set. The first sample data set is used to train a defect detection model of the spinning box 20. After obtaining the defect detection model, the image acquisition device 11 can be connected to the defect detection model and send a second working image of the spinning box 20 to the defect detection model. The defect detection model is used to detect the defect-related information of the second working image of the spinning box 20, and the defect-related information may include whether there is a defect, the detected defect type, and the confidence of each defect type. When the defect detection model detects that the second working image is defective, the mechanical arm of the inspection robot 10 can trigger a power supply of the spinning box 20 corresponding to the second working image, so that the spinning box 20 stops working and waits for maintenance. The mechanical arm of the inspection robot 10 can also trigger an alarm device on the spinning box 20 corresponding to the second working image, so that the spinning box 20 sends the alarm information to a user equipment. The alarm information can include the position, model, etc. of the spinning box 20.

According to the method of the embodiment of the present disclosure, the image acquisition device 11 and the processing device 12 of the inspection robot 10 are provided in this application scenario. The inspection robot 10 can obtain the defect-related information of the spinning box 20, and the inspection robot 10 can interact with the user equipment to send the defect-related information of the spinning box 20 to the user equipment, or realize various management functions related to the first sample data set.

Optionally, the above-mentioned processing device 12 may be provided in the inspection robot 10 or in a remote device. For example, the image acquisition device 11 and the processing device 12 may be deployed on the inspection robot 10 as shown in FIG. 1. Moreover, the processing device 12 may not be deployed on the inspection robot 10, that is, the inspection robot 10 may only be responsible for collecting images of the spinning box 20 and sending the images of the spinning box 20 to the processing device 12.

FIG. 2 shows a schematic diagram of a method for processing sample data according to an embodiment of the present disclosure. This method can be applied to an apparatus for processing sample data, and this apparatus can be deployed in an electronic device. The electronic device is, for example, a single-machine or multi-machine terminal, a server or other processing device. Here, the terminal may be a User Equipment (UE) such as a mobile device, a Personal Digital Assistant (PDA), a handheld device, a computing device, a vehicle-mounted device, a wearable device, etc. In some possible implementations, the method may also be implemented by the processor calling a computer-readable instruction stored in the memory. As shown in FIG. 1, the method may include the following steps S210 to S230.

Step S210: obtaining a plurality of first working images of a spinning box.

In an embodiment of the present disclosure, the first working images include images of one or more positions in the spinning box in the actual working state. Exemplarily, the first working images may include images at any at least one position among the spinneret, the yarn, the guide hook and the oil nozzle in the spinning box.

Exemplarily, the first working images may be obtained by shooting the spinning box by a inspection robot or a person in real time, or may be historical images of the spinning box in the database.

Exemplarily, the first working images may include normal images of the spinning box in the normal working state, and may also include defect images of the spinning box in the abnormal working state.

Step S220: for each first working image in the plurality of first working images, determining the first working image as a defect image of the spinning box when a difference between the first working image and a normal image of the spinning box meets a first condition.

In an embodiment of the present disclosure, the normal image includes an image of one or more positions in the spinning box during normal operation, and the position of the spinning box presented in the normal image is the same as or corresponds to the position of the spinning box presented in the first working image. For example, the first working image includes an image of the spinneret in the spinning box during operation (may be normal operation or abnormal operation, which needs to be judged), and then the normal image includes an image of the spinneret in the spinning box in the normal working state. For example, whether the image of the spinning box is a normal image can be judged from the quality of the chemical fiber produced by the spinning box. If the quality of the chemical fiber produced by the spinning box is relatively high, the image of the spinning box is a normal image. In practical applications, the normal images can be collected in advance to be applied in the above method.

Exemplarily, the pixels of the first working image can be compared with the pixels of the normal image, and the difference between the first working image and the normal image is obtained through the difference between the pixels of the first working image and the pixels of the normal image. Here, the pixels may be pixels at all positions in the image, or may be pixels at one or more positions in the image. For example, the pixels at the spinneret in the first working image and the normal image may be compared, to obtain the difference between the spinneret in the first working image and the spinneret in the normal image.

In an embodiment of the present disclosure, the first condition may be used to confirm whether the difference between the first working image and the normal image is obvious, or whether the difference is a defect of the first working image. Exemplarily, the first condition may be related to the sizes, number, locations, etc. of distinguishing positions. For example, the first condition may include: the number of pixels that are different between the first working image and the normal image is greater than a threshold (e.g., greater than 0, greater than 10, greater than 100, etc.), the area is greater than a threshold, etc.

Exemplarily, the first condition may be preset by the user, and the user may set a plurality of first conditions for a plurality of positions. The plurality of positions are, for example, the area to be cleaned on the spinneret, the floating yarn of the yarn wire, the position of the yarn guide hook, the position of the oil nozzle, etc.

In one implementation, the inspection robot can move to a preset position and shoot a plurality of spinning boxes to obtain the first working image and the normal image. The inspection robot moves to the preset position of each spinning box and has the same distance from each spinning box, so the first working image and the normal image have the same shooting angle and shooting distance, and the difference between the first working image and the normal image can be compared more intuitively.

Step S230: obtaining a first sample data set based on all defect images in the plurality of first working images; where the first sample data set is used to train to obtain a defect detection model of the spinning box, and the defect detection model is used to detect whether a second working image of the spinning box has a defect.

Exemplarily, each defect image in the first sample data set is used as an input image of a preset model, and is marked as defective. The input image and corresponding annotation information are used to train the preset model. When the preset model converges, the preset model can be determined as the defect detection model that can be applied to the actual defect detection process.

Optionally, the annotation information of the above-mentioned input image may also include the type of the defect, the position of the defect, and other information. The specific annotation process can be implemented manually or using an automated annotation tool.

In an embodiment of the present disclosure, the first sample data set may be used to train to obtain the defect detection model of the spinning box, and the defect detection model can be used to identify the second working image, to determine that the second working image is a normal image or a defect image. Optionally, the confidence of the normal image or defect image can also be obtained.

In an embodiment of the present disclosure, the second working image is used to represent the working state in which the spinning box is working. If the second working image obtained from the defect detection model is a normal image, then the spinning box is in the normal working state. If the second working image from the defect detection model is a defect image, the spinning box is in the abnormal working state, and the user can repair the spinning box in the abnormal working state. Exemplarily, the defect detection model can be a feature probability model or a neural network model based on deep learning, etc., and the second working image is obtained by shooting one or more spinning boxes by the inspection robot or person in real time, to detect the working states of one or more spinning boxes in real time.

Exemplarily, the first sample data set may include each defect image in the plurality of first working images, a partial image in each defect image, and an image obtained by clipping the background of the spinning box in each defect image or the above partial image.

As can be seen, according to the technical solution of the embodiment of the present disclosure, the defect image of the spinning box can be obtained by comparing the first working image of the spinning box with the normal image, and the first sample data set for training the defect detection model can be obtained from the defect image. Through the image comparison, there is no need to manually observe the spinning box for a long time, thus improving the efficiency of sample collection. Also, the abnormal area in the spinning box is subtle, so the comparison is performed by scanning the image. When the difference from the normal image meets a certain condition, this image can be judged as abnormal, which is more accurate than manual identification. Therefore, the above method can improve the collection efficiency and accuracy of the sample data, and accordingly improve the training efficiency and model accuracy of the defect detection model; and improve the accuracy of the defect detection model in detecting the second working image of the spinning box. As can be seen from the defect detection model, the second working image is a normal image or a defect image, so as to determine that the spinning box corresponding to the second working image is in the normal working state or abnormal working state in a timely and accurate manner, so that the user can be notified to repair the spinning box when the spinning box is in the abnormal working state, to avoid affecting the quality of the chemical fiber produced by the spinning box due to the abnormal work of the spinning box.

In some embodiments, the step of obtaining the first sample data set based on all defect images in the plurality of first working images may include:
classifying all the defect images according to at least one defect type, to obtain at least one image set corresponding to the at least one defect type one by one; and
obtaining the first sample data set based on the at least one image set.

Optionally, the at least one defect type includes at least one of defects of a spinneret, a yarn, a yarn guide hook and an oil nozzle in the spinning box. Specifically, at least one defect type may include the end breakage of yarn, floating yarn, hooking yarn, tilt of the oil nozzle, tilt of the yarn guide hook, the yarn being not in the yarn guide hook, etc. in the spinning box. For example, there are many objects to be cleaned on the spinneret, there is floating yarn on the yarn, the position of the yarn guide hook is tilted, the position of the oil nozzle is tilted, etc. Exemplarily, when there is floating yarn on the yarn in the defect image, this defect image is in an image set corresponding to the case where there is floating yarn on the yarn. If the position of the yarn guide hook is tilted in the defect image, this defect image may also be in an image set corresponding to the case where the position of the yarn guide hook is tilted.

Exemplarily, the pixels of the defect image can be compared with the pixels of the normal image, and the difference between the defect image and the normal image is obtained more precisely through the difference between the pixels of the defect image and the pixels of the normal image. Here, the pixels may be pixels at all positions in the image, or may be pixels at one or more positions in the image. For example, the pixels at the spinneret in the defect image and the normal image may be compared, to obtain the difference between the spinneret in the defect image and the spinneret in the normal image. If there are more objects to be cleaned at the spinneret in the defect image than the spinneret in the normal image, this defect image is in an image set corresponding to the case where there are more objects to be cleaned on the spinneret.

In one implementation, at least one defect detection model can correspond to at least one image set one by one, that is, using each image set for model training can obtain a defect detection model corresponding to a specific defect type. This defect detection model detects the second working image of the spinning box. Through this defect detection model, a defect detection model for whether the specific defect type exists in the second working image can be obtained. The specific defect type is a defect type corresponding to the image set for training. It can be understood that the training data of the defect detection model may also include images without the specific defect type, such as normal images or images corresponding to other defect types. According to the above implementation, the selection can be performed on a plurality of defect types according to the user requirement, and the defect type selected by the user can be trained to obtain a defect detection model. For example, the first sample data set includes an image set corresponding to the case where the position of the yarn guide hook is tilted and an image set corresponding to the case where the position of the oil nozzle is tilted. The user can choose to train the image set corresponding to the case where the position of the yarn guide hook is tilted, to obtain a defect detection model. By using this defect detection model to detect the second working image, it can be obtained whether the yarn guide hook of the spinning box corresponding to the second working image is tilted.

In one implementation, one defect detection model may correspond to all image sets, and the defect detection model detects the second working image of the spinning box. Through this defect detection model, it can be obtained whether the second working image has a defect, and the defect type of the defect can be obtained in the case where the defect exists. For example, the first sample data set includes an image set corresponding to the case where the position of the yarn guide hook is tilted and an image set corresponding to the case where the position of the oil nozzle is tilted. The model training may be performed using these image sets, to obtain a defect detection model. By using this defect detection model to detect the second working image, it can be obtained whether the yarn guide hook and oil nozzle of the spinning box corresponding to the second working image are tilted.

In one implementation, when the second working image is a defect image derived from the defect detection model, the defect type of the second working image and the confidence of the defect type may also be obtained through the defect detection model. The confidence of a defect type is used to represent the probability that the defect type of the second working image is this defect type. For example, the defect confidence of the spinneret may be the probability that the spinneret of the second working image has a defect.

According to the technical solution of the embodiments of the present disclosure, the first sample data set may include an image set of at least one defect type. When the second working image is a defect image, the defect type of the second working image can be obtained through the defect detection model, and the user can repair the spinning box corresponding to the second working image according to the defect type of the second working image, thus improving the repairment efficiency of the spinning box in the abnormal working state.

In some embodiments, the step of obtaining the first sample data set based on the at least one image set may include:
for each image set in the at least one image set, clipping each image in the image set according to a defect type corresponding to the image set, to obtain a detection area image set corresponding to the image set; and
obtaining the first sample data set based on at least one detection area image set corresponding to the at least one image set one by one.

In an embodiment of the present disclosure, the detection area image set may include a set of images of the detection area after clipping each image in the image set, and the detection area includes defect type areas corresponding to the image set and all images in the image set. Here, the clipping operation may be retaining only an area of a specific defect type in the image and removing other parts. Exemplarily, the defect type corresponding to the image set is the tilted position of the oil nozzle, and then the detection area is the position of the oil nozzle in each image in the image set. The position image of the oil nozzle in each image in the image set may be clipped, to obtain the detection area image set.

Exemplarily, the pixels of the detection area of each image in the image set may be clipped, to obtain the detection area image set corresponding to the defect type of the image set more accurately.

According to the technical solution of the embodiments of the present disclosure, by clipping each image in the image set according to the defect type corresponding to the image set, only the detection area image set corresponding to the image set can be trained to obtain the defect detection model, thus reducing the computational power required to obtain the defect detection model through training, and lowering the training cost of the defect detection model.

In some embodiments, the method for processing sample data further includes:
determining a second sample data set from the first sample data set based on a feature quantity of each image in the first sample data set when a confidence of the defect detection model does not meet a second condition; and
updating the defect detection model based on the second sample data set.

In an embodiment of the present disclosure, the confidence of the defect detection model may be determined based on the confidence that the second working image is a normal image, the confidence of the defect image, or the confidence of the defect type of the defect image, etc. derived from the defect detection model. For example, if a mode has low confidence in the information outputted for one or more images, the model can be considered to have low confidence.

Alternatively, the confidence of the defect detection model can be determined using a verification image. For example, the images in the first sample data set can be divided into training images and verification images. The training images are used to train to obtain the defect detection model, and the verification images are used to verify whether the defect detection model can accurately discriminate the defects in the verification images. The confidence of the defect detection model is determined according to the proportion of accurate discrimination.

For example, when the confidence does not meet the second condition (for example, when the confidence is lower than a threshold), the feature quantity of each image can be determined according to the difference between the detection area of the image and the corresponding area of the normal image. For example, if the difference between the detection area of an image in the image set and the corresponding area of the normal image is relatively large, it is determined that the feature quantity of the image is relatively high. Thus, images with higher feature quantities can be selected from the first sample data set, to update the defect detection model.

According to the technical solution of the embodiments of the present disclosure, the defect detection model can be updated through the feature quantity of each image in the first sample data set, thus improving the detection accuracy of the defect detection model.

In some embodiments, the step of determining the second sample data set from the first sample data set based on the feature quantity of each image in the first sample data set may include:
clustering all images in the first sample data set to obtain a plurality of clusters;
for each cluster in the plurality of clusters, determining a target image in the cluster based on a feature quantity of each image in the cluster; and
obtaining the second sample data set based on the target image in each cluster.

According to the above embodiments, the feature differences between the clusters are relatively large. The target image is selected according to the feature quantities of images in each cluster, so that the selected target images have obvious differences and high feature quantities, thereby further improving the quality of the second sample data set and accordingly improving the accuracy of the defect detection model.

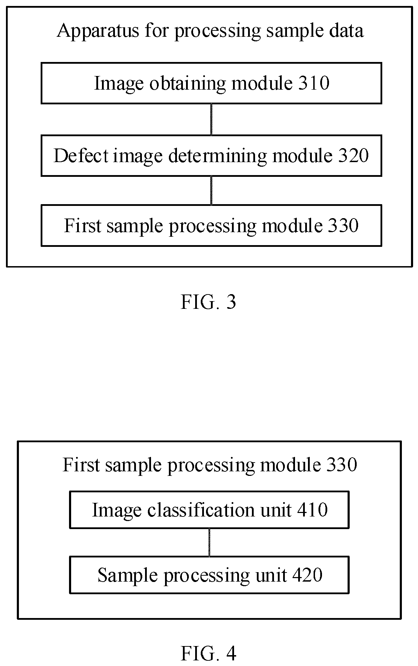

According to an embodiment of the present disclosure, the present disclosure further provides an apparatus for processing sample data. FIG. 3 shows a schematic block diagram of the apparatus for processing sample data according to an embodiment of the present disclosure. As shown in FIG. 3, the apparatus for processing sample data includes:
an image obtaining module 310 configured to obtain a plurality of first working images of a spinning box;
a defect image determining module 320 configured to, for each first working image in the plurality of first working images, determine the first working image as a defect image of the spinning box when a difference between the first working image and a normal image of the spinning box meets a first condition; and
a first sample processing module 330 configured to obtain a first sample data set based on all defect images in the plurality of first working images; where the first sample data set is used to train to obtain a defect detection model of the spinning box, and the defect detection model is used to detect whether a second working image of the spinning box has a defect.

In some embodiments, as shown in FIG. 4, the first sample processing module 330 includes:
an image classification unit 410 configured to classify all the defect images according to at least one defect type, to obtain at least one image set corresponding to the at least one defect type one by one; and
a sample processing unit 420 configured to obtain the first sample data set based on the at least one image set.

In some embodiments, the at least one defect type includes at least one of defects of a spinneret, a yarn, a yarn guide hook and an oil nozzle in the spinning box.

In some embodiments, the sample processing unit 420 is specifically configured to:
for each image set in the at least one image set, clip each image in the image set according to a defect type corresponding to the image set, to obtain a detection area image set corresponding to the image set; and
obtain the first sample data set based on at least one detection area image set corresponding to the at least one image set one by one.

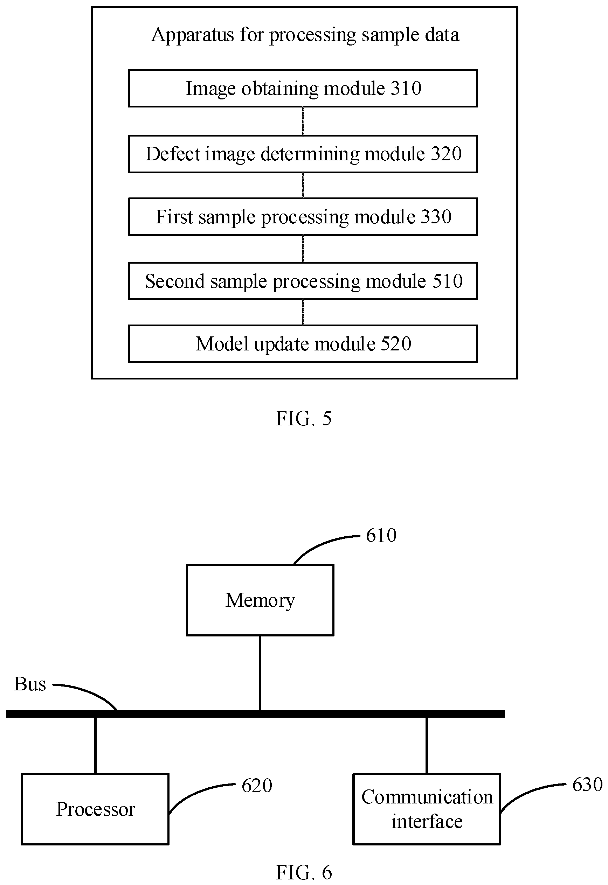

In some embodiments, as shown in FIG. 5, the apparatus for processing sample data further includes:
a second sample processing module 510 configured to determine a second sample data set from the first sample data set based on a feature quantity of each image in the first sample data set when a confidence of the defect detection model does not meet a second condition; and
a model update module 520 configured to update the defect detection model based on the second sample data set.

In some embodiments, the second sample processing module 510 is specifically configured to:
cluster all images in the first sample data set to obtain a plurality of clusters;
for each cluster in the plurality of clusters, determine a target image in the cluster based on a feature quantity of each image in the cluster; and
obtain the second sample data set based on the target image in each cluster.

FIG. 6 is a structural block diagram of an electronic device according to an embodiment of the present disclosure. As shown in FIG. 6, the electronic device includes: a memory 610 and a processor 620, and the memory 610 stores a computer program that can run on the processor 620. There may be one or more memories 610 and processors 620. The memory 610 may store one or more computer programs, and the one or more computer programs cause the electronic device to perform the method provided in the above method embodiment, when executed by the electronic device. The electronic device may also include: a communication interface 630 configured to communicate with an external device for data interactive transmission.

If the memory 610, the processor 620 and the communication interface 630 are implemented independently, the memory 610, the processor 620 and the communication interface 630 may be connected to each other and complete communication with each other through a bus. The bus may be an Industry Standard Architecture (ISA) bus, a Peripheral Component Interconnect (PCI) bus, or an Extended Industry Standard Architecture (EISA) bus, etc. The bus may be divided into address bus, data bus, control bus, etc. For ease of representation, the bus is represented by only one thick line in FIG. 6, but this thick line does not represent only one bus or only one type of bus.

Optionally, in a specific implementation, if the memory 610, the processor 620 and the communication interface 630 are integrated on one chip, the memory 610, the processor 620 and the communication interface 630 may communicate with each other through an internal interface.

It should be understood that the above-mentioned processor may be a Central Processing Unit (CPU) or other general-purpose processor, a Digital Signal Processor (DSP), an Application Specific Integrated Circuit (ASIC), a Field Programmable Gate Array (FPGA) or other programmable logic device, a discrete gate or transistor logic device, a discrete hardware component, etc. The general-purpose processor may be a microprocessor or any conventional processor, etc. It is worth noting that the processor may be a processor that supports the Advanced RISC Machines (ARM) architecture.

Further, optionally, the above-mentioned memory may include a read-only memory and a random access memory, and may also include a non-volatile random access memory. The memory may be a volatile memory or a non-volatile memory, or may include both a volatile memory and a non-volatile memory. Here, the non-volatile memory may include a Read-Only Memory (ROM), a Programmable ROM (PROM), an Erasable PROM (EPROM), an Electrically EPROM (EEPROM) or a flash memory. The volatile memory may include a Random Access Memory (RAM), which acts as an external cache. By way of illustration and not limitation, many forms of RAMs are available, for example, Static RAM (SRAM), Dynamic Random Access Memory (DRAM), Synchronous DRAM (SDRAM), Double Data Date SDRAM (DDR SDRAM), Enhanced SDRAM (ESDRAM), Synchlink DRAM (SLDRAM) and Direct RAMBUS RAM (DR RAM).

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, the processes or functions described in the embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, Digital Subscriber Line (DSL)) or wireless (e.g., infrared, Bluetooth, microwave, etc.) way. The computer readable storage medium may be any available medium that can be accessed by a computer, or a data storage device such as server or data center that is integrated with one or more available media. The available media may be magnetic media (for example, floppy disk, hard disk, magnetic tape), optical media (for example, Digital Versatile Disc (DVD)), or semiconductor media (for example, Solid State Disk (SSD)), etc. It is worth noting that the computer readable storage medium mentioned in the present disclosure may be a non-volatile storage medium, in other words, may be a non-transitory storage medium.

Those having ordinary skill in the art can understand that all or some of the steps for implementing the above embodiments may be completed by hardware, or may be completed by instructing related hardware through a program. The program may be stored in a computer readable storage medium. The above-mentioned storage medium may be a read-only memory, a magnetic disk or an optical disk, etc.

In the description of the embodiments of the present disclosure, the description with reference to the terms "one embodiment", "some embodiments", "example", "specific example" or "some examples", etc. means that specific features, structures, materials or characteristics described in conjunction with the embodiment or example are included in at least one embodiment or example of the present disclosure. Moreover, the specific features, structures, materials or characteristics described may be combined in a suitable manner in any one or more embodiments or examples. In addition, those skilled in the art can integrate and combine different embodiments or examples and features of different embodiments or examples described in this specification without conflicting with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the number of technical features indicated. Therefore, the feature defined with "first" or "second" may explicitly or implicitly include one or more features. In the description of the embodiments of the present disclosure, "multiple" means two or more, unless otherwise specified.

The above descriptions are only exemplary embodiments of the present disclosure and not intended to limit the present disclosure.

## Claims

1. A method for processing sample data, comprising
obtaining (S210), by an image acquisition device (11) provided on an inspection robot (10) deployed in a workshop, a plurality of first working images, by:
capturing, by the image acquisition device (11), a first working image of each spinning box of a plurality of spinning boxes in the workshop, while the inspection robot (10) moves to a preset position of each spinning box of the plurality of spinning boxes;
for each first working image in the plurality of first working images, determining (S220), by a processing device (12), the first working image as a defect image in a case of a difference between the first working image and a normal image of a spinning box in a normal working state meets a first condition, by:
comparing, by the processing device (12), pixels of the first working image with pixels of the normal image, wherein the normal image collected in advance has a same shooting angle and shooting distance with the plurality of first working images, and
determining, by the processing device (12), the first working image as the defect image, in a case of a number of pixels that are different between the first working image and the normal image is greater than a threshold; and
obtaining (S230), by the processing device (12), a first sample data set based on all defect images in the plurality of first working images; wherein the first sample data set is used to train to obtain a defect detection model, and the defect detection model is used to detect whether a second working image of any one spinning box shot in real time by the image acquisition device (11) provided on the inspection robot (10) has a defect.

2. The method of claim 1, wherein obtaining, by the processing device (12), the first sample data set based on all the defect images in the plurality of first working images, comprises:
classifying all the defect images according to at least one defect type, to obtain at least one image set corresponding to the at least one defect type one by one; and
obtaining the first sample data set based on the at least one image set.

3. The method of claim 2, wherein the at least one defect type comprises at least one of defects of a spinneret, a yarn, a yarn guide hook and an oil nozzle in the spinning box.

4. The method of claim 2, wherein obtaining the first sample data set based on the at least one image set, comprises:
for each image set in the at least one image set, clipping each image in the image set according to a defect type corresponding to the image set, to obtain a detection area image set corresponding to the image set; and
obtaining the first sample data set based on at least one detection area image set corresponding to the at least one image set one by one.

5. The method of any one of claims 1 to 4, further comprising:
determining a second sample data set from the first sample data set based on a feature quantity of each image in the first sample data set in a case of a confidence of the defect detection model does not meet a second condition; and
updating the defect detection model based on the second sample data set.

6. The method of claim 5, wherein determining the second sample data set from the first sample data set based on the feature quantity of each image in the first sample data set, comprises:
clustering all images in the first sample data set to obtain a plurality of clusters;
for each cluster in the plurality of clusters, determining a target image in the cluster based on a feature quantity of each image in the cluster; and
obtaining the second sample data set based on the target image in each cluster.

7. An apparatus for processing sample data, comprising:
an image obtaining module (310) provided on an inspection robot (10) deployed in a workshop, wherein the image obtaining module (310) is configured to obtain a plurality of first working images, by:
capturing a first working image of each spinning box of a plurality of spinning boxes in the workshop, while the inspection robot (10) moves to a preset position of each spinning box of the plurality of spinning boxes;
a defect image determining module (320) configured to, for each first working image in the plurality of first working images, determine the first working image as a defect image in a case of a difference between the first working image and a normal image of a spinning box in a normal working state meets a first condition, by:
comparing pixels of the first working image with pixels of the normal image, wherein the normal image collected in advance has a same shooting angle and shooting distance with the plurality of first working images, and
determining the first working image as the defect image, in a case of a number of pixels that are different between the first working image and the normal image is greater than a threshold; and
a first sample processing module (330) configured to obtain a first sample data set based on all defect images in the plurality of first working images; wherein the first sample data set is used to train to obtain a defect detection model, and the defect detection model is used to detect whether a second working image of any one spinning box shot in real time by the image obtaining module (310) provided on the inspection robot (10) has a defect.

8. The apparatus of claim 7, wherein the first sample processing module comprises:
an image classification unit (410) configured to classify all the defect images according to at least one defect type, to obtain at least one image set corresponding to the at least one defect type one by one; and
a sample processing unit (420) configured to obtain the first sample data set based on the at least one image set.

9. The apparatus of claim 8, wherein the at least one defect type comprises at least one of defects of a spinneret, a yarn, a yarn guide hook and an oil nozzle in the spinning box.

10. The apparatus of claim 8, wherein the sample processing unit is configured to:
for each image set in the at least one image set, clip each image in the image set according to a defect type corresponding to the image set, to obtain a detection area image set corresponding to the image set; and
obtain the first sample data set based on at least one detection area image set corresponding to the at least one image set one by one.

11. The apparatus of any one of claims 7 to 10, further comprising:
a second sample processing module (510) configured to determine a second sample data set from the first sample data set based on a feature quantity of each image in the first sample data set in a case of a confidence of the defect detection model does not meet a second condition; and
a model update module (520) configured to update the defect detection model based on the second sample data set.

12. The apparatus of claim 11, wherein the second sample processing module is configured to:
cluster all images in the first sample data set to obtain a plurality of clusters;
for each cluster in the plurality of clusters, determine a target image in the cluster based on a feature quantity of each image in the cluster; and
obtain the second sample data set based on the target image in each cluster.

13. A non-transitory computer-readable storage medium storing a computer instruction thereon, wherein the computer instruction is used to cause a computer to execute the method of any one of claims 1 to 6.

## Patentansprüche

1. Ein Verfahren zur Verarbeitung von Probedaten, das umfasst:
Aufnahme (S210) einer Vielzahl von ersten Arbeitsbildern durch eine an einem in einer Werkstatt eingesetzten Inspektionsroboter (10) angebrachte Bildaufnahmevorrichtung (11), und zwar durch:
Aufnahmen eines ersten Arbeitsbildes von jeder Spinnbox aus einer Vielzahl von Spinnboxen in der Werkstatt durch die Bildaufnahmevorrichtung (11), während sich der Inspektionsroboter (10) zu einer voreingestellten Position jeder Spinnbox aus der Vielzahl von Spinnboxen bewegt;
für jedes erste Arbeitsbild in der Vielzahl von ersten Arbeitsbildern, Bestimmen (S220) durch eine Verarbeitungsvorrichtung (12) des ersten Arbeitsbildes als ein Fehlerbild fallseine Abweichung zwischen dem ersten Arbeitsbild und einem Normalbild einer Spinnbox in einem normalen Betriebszustand eine erste Bedingung erfüllt, durch:
Vergleichen, durch die Verarbeitungsvorrichtung (12), von Pixeln des ersten Arbeitsbildes mit Pixeln des Normalbildes, wobei das im Voraus erfasste Normalbild denselben Aufnahmewinkel und denselben Aufnahmeabstand wie die Vielzahl der ersten Arbeitsbilder hat, und
Bestimmen, durch die Verarbeitungsvorrichtung (12), des ersten Arbeitsbildes als Fehlerbild,, falls die Anzahl der Pixel, die sich zwischen dem ersten Arbeitsbild und dem Normalbild unterscheiden, größer als ein Schwellenwert ist; und
Erhalten (S230), durch die Verarbeitungsvorrichtung (12), eines ersten Probedatensatzes auf der Grundlage aller Fehlerbilder in der Vielzahl erster Arbeitsbilder; wobei der erste Probedatensatz zum Trainieren verwendet wird, um ein Fehlererkennungsmodell zu erhalten, und das Fehlererkennungsmodell verwendet wird, um zu erkennen, ob ein zweites Arbeitsbild einer beliebigen Spinnbox, das in Echtzeit von der Bildaufnahmevorrichtung (11) aufgenommen wurde, die auf dem Inspektionsroboter (10) angebracht ist, einen Fehler aufweist.

2. Verfahren nach Anspruch 1, wobei das Erhalten des ersten Probedatensatzes durch die Verarbeitungsvorrichtung (12) auf der Grundlage aller Fehlerbilder in der Vielzahl der ersten Arbeitsbilder umfasst:
Klassifizieren aller Fehlerbilder nach mindestens einem Fehlertyp, um nacheinander mindestens einen Bildsatz zu erhalten, der dem mindestens einen Fehlertyp entspricht; und
Erhalten des ersten Probedatensatzes auf der Grundlage des mindestens einen Bildsatzes.

3. Verfahren nach Anspruch 2, wobei der mindestens eine Fehlertyp mindestens einen der Fehler einer Spindel, eines Garns, eines Garnführungshakens und einer Öldüse in der Spinnbox umfasst.

4. Verfahren nach Anspruch 2, wobei das Erhalten des ersten Probedatensatzes auf der Grundlage des mindestens einen Bildsatzes umfasst:
für jeden Bildsatz in dem mindestens einen Bildsatz, das Zuschneiden jedes Bildes in dem Bildsatz entsprechend einem dem Bildsatz entsprechenden Fehlertyp, um einen dem Bildsatz entsprechenden Erkennungsbereich-Bildsatz zu erhalten; und
Erhalten des ersten Probedatensatzes auf der Grundlage mindestens eines dem Bildsatz entsprechenden Erkennungsbereich-Bildsatzes, der dem mindestens einen Bildsatz entspricht, nacheinander.

5. Verfahren nach einem der Ansprüche 1 bis 4, das ferner umfasst:
Bestimmeneines zweiten Probedatensatzes aus dem ersten Probedatensatz auf der Grundlage einer Merkmalsgröße jedes Bildes im ersten Probedatensatz, falls eine Zuverlässigkeit des Fehlererkennungsmodells eine zweite Bedingung nicht erfüllt; und
Aktualisieren des Fehlererkennungsmodells auf der Grundlage des zweiten Probedatensatzes.

6. Verfahren nach Anspruch 5, wobei das Bestimmendes zweiten Probedatensatzes aus dem ersten Probedatensatz auf der Grundlage der Merkmalsgröße jedes Bildes im ersten Probedatensatz umfasst:
das Clustern aller Bilder im ersten Probedatensatz, um eine Vielzahl von Clustern zu erhalten;
für jeden Cluster der Vielzahl von Clustern, das Bestimmen eines Zielbildes in dem Cluster auf der Grundlage einer Merkmalsgröße jedes Bildes in dem Cluster; und
Erhalten des zweiten Probedatensatzes auf der Grundlage des Zielbildes in jedem Cluster.

7. Vorrichtung zur Verarbeitung von Probedaten, die umfasst:
ein Bildaufnahmemodul (310), das an einem in einer Werkstatt eingesetzten Inspektionsroboter (10) angebracht ist, wobei das Bildaufnahmemodul (310) so ausgestaltet ist, dass es eine Vielzahl von ersten Arbeitsbildern aufnimmt, durch:
Aufnahme eines ersten Arbeitsbildes von jeder Spinnboxaus einer Vielzahl von Spinnboxen in der Werkstatt, während sich der Inspektionsroboter (10) zu einer voreingestellten Position jeder Spinnboxaus der Vielzahl von Spinnboxenbewegt;
ein Fehlerbildbestimmungsmodul (320) , das so ausgestaltet ist, dass es für jedes erste Arbeitsbild aus der Vielzahl von ersten Arbeitsbildern das erste Arbeitsbild als Fehlerbild bestimmt, falls eine Abweichung zwischen dem ersten Arbeitsbild und einem Normalbild einer Spinnbox in einem normalen Betriebszustand eine erste Bedingung erfüllt, durch:
Vergleichen von Pixeln des ersten Arbeitsbildes mit Pixeln des Normalbildes, wobei das im Vorauserfasste Normalbild denselben Aufnahmewinkel und denselben Aufnahmeabstand hat wie die Vielzahl der ersten Arbeitsbilder, und
Bestimmen des ersten Arbeitsbildes als Fehlerbild, falls die Anzahl der Pixel, die sich zwischen dem ersten Arbeitsbild und dem Normalbild unterscheiden, größer als ein Schwellenwert ist; und
ein erstes Probenverarbeitungsmodul (330), das so ausgestaltet ist, dass es einen ersten Proberobedatensatz auf der Grundlage aller Fehlerbilder in der Vielzahl der ersten Arbeitsbilder erhält; wobei der erste Probedatensatz zum Trainieren verwendet wird, um ein Fehlererkennungsmodell zu erhalten, und das Fehlererkennungsmodell verwendet wird, um zu erkennen, ob ein zweites Arbeitsbild einer beliebigen Spinnbox, das in Echtzeit von dem auf dem Inspektionsroboter (10) angebrachten Bildaufnahmemodul (310) aufgenommen wurde, einen Fehler aufweist.

8. Vorrichtung nach Anspruch 7, wobei das erste Probenverarbeitungsmodul umfasst:
eine Bildklassifizierungseinheit (410), die so ausgestaltet ist, dass sie alle Fehlerbilder nach mindestens einem Fehlertyp klassifiziert, um nacheinander mindestens einen Bildsatz zu erhalten, der dem mindestens einen Fehlertyp entspricht; und
eine Probenverarbeitungseinheit (420), die so ausgestaltet ist, dass sie den ersten Probedatensatz auf der Grundlage des mindestens einen Bildsatzes erhält.

9. Vorrichtung nach Anspruch 8, wobei der mindestens eine Fehlertyp mindestens einen der Fehlereiner Spindel, eines Garns, eines Garnführungshakens und einer Öldüse in der Spinnbox umfasst.

10. Vorrichtung nach Anspruch 8, wobei die Probenverarbeitungseinheit so ausgestaltet ist, dass sie:
für jeden Bildsatz in dem mindestens einen Bildsatz jedes Bild in dem Bildsatz entsprechend einem dem Bildsatz entsprechenden Fehlertyp ausschneidet, um einen dem Bildsatz entsprechenden Erkennungsbereich-Bildsatz zu erhalten; und
Erhalten desersten Probedatensatzes auf der Grundlage mindestens eines Erkennungsbereich-Bildsatzes, der dem mindestens einen Bildsatz entspricht, nacheinander.

11. Vorrichtung nach einem der Ansprüche 7 bis 10, die ferner umfasst:
ein zweites Probenverarbeitungsmodul (510), das so ausgestaltet ist, dass es einen zweiten Probedatensatz aus dem ersten Probedatensatz auf der Grundlage einer Merkmalsgröße jedes Bildes im ersten Probedatensatz bestimmt, falls eine Zuverlässigkeit des Fehlererkennungsmodells eine zweite Bedingung nicht erfüllt; und
ein Modellaktualisierungsmodul (520), das so ausgestaltet ist, dass es das Fehlererkennungsmodell auf der Grundlage des zweiten Probedatensatzes aktualisiert.

12. Vorrichtung nach Anspruch 11, wobei das zweite Probenverarbeitungsmodul so ausgestaltet ist, dass es:
alle Bilder im ersten Probendatensatzcluster, um eine Vielzahl von Clustern zu erhalten;
für jeden Cluster der Vielzahl von Clustern ein Zielbild in dem Cluster auf der Grundlage einer Merkmalsgröße jedes Bildes in dem Clusterbestimmt; und
den zweiten Probedatensatz auf der Grundlage des Zielbildes in jedem Clustererhält.

13. Ein dauerhaftes, computerlesbares Speichermedium, auf dem eine Computeranweisung gespeichert ist, wobei die Computeranweisung dazu dient, einen Computer zu veranlassen, das Verfahren nach einem der Ansprüche 1 bis 6 auszuführen.

## Revendications

1. Procédé de traitement de données d'échantillon, comprenant :
l'obtention (S210), par un dispositif d'acquisition d'image (11) disposé sur un robot d'inspection (10) déployé dans un atelier, d'une pluralité de premières images de travail, par :
la capture, par le dispositif d'acquisition d'image (11), d'une première image de travail de chaque boîte de filage d'une pluralité de boîtes de filage dans l'atelier, en même temps que le robot d'inspection (10) se déplace vers une position prédéfinie de chaque boîte de filage de la pluralité de boîtes de filage ;
pour chaque première image de travail de la pluralité de premières images de travail, la détermination (S220), par un dispositif de traitement (12), de la première image de travail en tant qu'image de défaut dans le cas où une différence entre la première image de travail et une image normale d'une boîte de filage dans un état de travail normal remplit une première condition, en :
la comparaison, par le dispositif de traitement (12), de pixels de la première image de travail avec des pixels de l'image normale, dans lequel l'image normale collectée à l'avance présente un angle de prise de vue et une distance de prise de vue identiques à ceux de la pluralité de premières images de travail, et
la détermination, par le dispositif de traitement (12), de la première image de travail en tant qu'image de défaut, dans le cas où un nombre de pixels qui sont différents entre la première image de travail et l'image normale est supérieur à un seuil ; et
l'obtention (S230), par le dispositif de traitement (12), d'un premier ensemble de données d'échantillon sur la base de toutes les images de défaut dans la pluralité de premières images de travail ; dans lequel le premier ensemble de données d'échantillon sert à la formation afin d'obtenir un modèle de détection de défaut, et le modèle de détection de défaut sert à détecter si une seconde image de travail d'une quelconque boîte de filage prise en temps réel par le dispositif d'acquisition d'image (11) disposé sur le robot d'inspection (10) présente un défaut.

2. Procédé selon la revendication 1, dans lequel l'obtention, par le dispositif de traitement (12), du premier ensemble de données d'échantillon sur la base de toutes les images de défaut dans la pluralité de premières images de travail, comprend :
le classement de toutes les images de défaut selon au moins un type de défaut, pour obtenir au moins un ensemble d'images correspondant individuellement à l'au moins un type de défaut ; et
l'obtention du premier ensemble de données d'échantillon sur la base de l'au moins un ensemble d'images.

3. Procédé selon la revendication 2, dans lequel l'au moins un type de défaut comprend au moins l'un des défauts d'une filière, d'un fil, d'un crochet de guidage de fil et d'un gicleur d'huile dans la boîte de filage.

4. Procédé selon la revendication 2, dans lequel l'obtention du premier ensemble de données d'échantillon sur la base de l'au moins un ensemble d'images, comprend :
pour chaque ensemble d'images dans l'au moins un ensemble d'images, le découpage de chaque image dans l'ensemble d'images selon un type de défaut correspondant à l'ensemble d'images, pour obtenir un ensemble d'images de zone de détection correspondant à l'ensemble d'images ; et
l'obtention du premier ensemble de données d'échantillon sur la base d'au moins un ensemble d'images de zone de détection correspondant individuellement à l'au moins un ensemble d'images.

5. Procédé selon l'une quelconque des revendications 1 à 4, comprenant en outre :
la détermination d'un second ensemble de données d'échantillon à partir du premier ensemble de données d'échantillon sur la base d'une quantité de caractéristiques de chaque image dans le premier ensemble de données d'échantillon dans un cas où une confiance du modèle de détection de défaut ne satisfait pas à une seconde condition ; et
la mise à jour du modèle de détection de défaut sur la base du second ensemble de données d'échantillon.

6. Procédé selon la revendication 5, dans lequel la détermination du second ensemble de données d'échantillon à partir du premier ensemble de données d'échantillon sur la base de la quantité de caractéristiques de chaque image dans le premier ensemble de données d'échantillon, comprend :
le regroupement de toutes les images dans le premier ensemble de données d'échantillon pour obtenir une pluralité de groupes ;
pour chaque groupe dans la pluralité de groupes, la détermination d'une image cible dans le groupe sur la base d'une quantité de caractéristiques de chaque image dans le groupe ; et
l'obtention du second ensemble de données d'échantillon sur la base de l'image cible dans chaque groupe.

7. Appareil de traitement de données d'échantillon, comprenant :
un module d'obtention d'image (310) disposé sur un robot d'inspection (10) déployé dans un atelier, dans lequel le module d'obtention d'image (310) est configuré pour obtenir une pluralité de premières images de travail, par :
la capture d'une première image de travail de chaque boîte de filage d'une pluralité de boîtes de filage dans l'atelier, en même temps que le robot d'inspection (10) se déplace vers une position prédéfinie de chaque boîte de filage de la pluralité de boîtes de filage ;
un module de détermination d'image de défaut (320) configuré pour, pour chaque première image de travail dans la pluralité de premières images de travail, déterminer la première image de travail en tant qu'image de défaut dans le cas où une différence entre la première image de travail et une image normale d'une boîte de filage dans un état de travail normal remplit une première condition, par :
la comparaison de pixels de la première image de travail avec des pixels de l'image normale, dans lequel l'image normale collectée à l'avance présente un angle de prise de vue et une distance de prise de vue identiques à ceux de la pluralité de premières images de travail, et
la détermination de la première image de travail en tant qu'image de défaut, dans un cas où un nombre de pixels qui sont différents entre la première image de travail et l'image normale est supérieur à un seuil ; et
un premier module de traitement d'échantillon (330) configuré pour obtenir un premier ensemble de données d'échantillon sur la base de toutes les images de défauts dans la pluralité de premières images de travail ; dans lequel le premier ensemble de données d'échantillon sert à la formation afin d'obtenir un modèle de détection de défaut, et le modèle de détection de défaut sert à détecter si une seconde image de travail d'une boîte de filage prise en temps réel par le module d'obtention d'images (310) disposé sur le robot d'inspection (10) présente un défaut.

8. Appareil selon la revendication 7, dans lequel le premier module de traitement d'échantillon comprend :
une unité de classification d'images (410) configurée pour classifier toutes les images de défaut selon au moins un type de défaut, pour obtenir au moins un ensemble d'images correspondant individuellement à l'au moins un type de défaut ; et
une unité de traitement d'échantillon (420) configurée pour obtenir le premier ensemble de données d'échantillon sur la base de l'au moins un ensemble d'images.

9. Appareil selon la revendication 8, dans lequel l'au moins un type de défaut comprend au moins l'un parmi les défauts d'une filière, d'un fil, d'un crochet de guidage de fil et d'un gicleur d'huile dans la boîte de filage.

10. Appareil selon la revendication 8, dans lequel l'unité de traitement d'échantillons est configurée pour :
pour chaque ensemble d'images dans l'au moins un ensemble d'images, découper chaque image dans l'ensemble d'images selon un type de défaut correspondant à l'ensemble d'images, pour obtenir un ensemble d'images de zone de détection correspondant à l'ensemble d'images ; et
obtenir le premier ensemble de données d'échantillon sur la base d'au moins un ensemble d'images de zone de détection correspondant individuellement à l'au moins un ensemble d'images.

11. Appareil selon l'une quelconque des revendications 7 à 10, comprenant en outre :
un second module de traitement d'échantillon (510) configuré pour déterminer un second ensemble de données d'échantillon à partir du premier ensemble de données d'échantillon sur la base d'une quantité de caractéristiques de chaque image dans le premier ensemble de données d'échantillon dans un cas où une confiance du modèle de détection de défaut ne satisfait pas à une seconde condition ; et
un module de mise à jour de modèle (520) configuré pour mettre à jour le modèle de détection de défaut sur la base du second ensemble de données d'échantillon.

12. Appareil selon la revendication 11, dans lequel le second module de traitement d'échantillon est configuré pour :
regrouper toutes les images dans le premier ensemble de données d'échantillon pour obtenir une pluralité de groupes ;
pour chaque groupe dans la pluralité de groupes, déterminer une image cible dans le groupe sur la base d'une quantité de caractéristiques de chaque image dans le groupe ; et
obtenir le second ensemble de données d'échantillon sur la base de l'image cible dans chaque groupe.

13. Support de stockage non transitoire lisible par ordinateur sur lequel une instruction informatique est stockée, dans lequel l'instruction informatique sert à amener un ordinateur à exécuter le procédé selon l'une quelconque des revendications 1 à 6.
